# EUROPEAN PATENT APPLICATION

(11) **EP 3 104 098 A1**
(43) Date of publication of application: **14.12.2016**
(21) Application number: 16172584.1
(22) Date of filing: 02.06.2016
(51) Int. Cl.: F24J 2/20, F24J 2/46, F24J 2/48, F24J 2/51

(54) **SOLAR THERMAL ABSORBER ELEMENT**

(30) Priority: 08.06.2015 FI 20155432
(71) Applicant: Savo-Solar Oy, 50150 Mikkeli (FI)
(72) Inventor: PISCHOW, Kaj, FI-50100 MIKKELI (FI)
(74) Representative: Berggren Oy Ab

(57) **Abstract**

The application relates to a solar thermal collector that comprises a solar thermal absorber element (100). The element comprises a cover glass (110), a direct-flow absorber (120), a fore thermoplastic sealing (130) for attaching the cover glass and the absorber to each other so that there is a distance (h₁) therebetween, and a fore sealed space (134), which is formed by the cover glass, the absorber, and the fore sealing. The fore space is filled up with a first low thermal conductive gas (136). The element further comprises a back insulation part (160), a back thermoplastic sealing (170) for attaching the insulation part and the absorber to each other so that there is a distance (h₂) therebetween, and a back sealed space (174), which is formed by the insulation part, the absorber, and the back sealing. The back space is filled up with a second low thermal conductive gas (176). The element may comprise e.g. TPS-direct-flow absorber-glass element, wherein the back insulation part of e.g. glass is hermetically sealed with the TPS sealing and the back space is filled with the second gas.

## Description

### Technical field

The application relates generally to a solar thermal absorber element.

### Background of the nvention

Sand, salt, and insects, which have invaded inside a structure of solar thermal collectors along flowing air, cause damages decreasing a lifetime and an efficiency of the collectors.

In order to eliminate these damages, it has been developed a thermoplastic spacer (TPS) sealed absorber module, wherein a cover glass is sealed with an absorber by a TPS.

The TPS sealed module protects the absorber by preventing undesirable sand, salt, and insects to invade inside the absorber element.

However, manufacturing costs of collectors, even if absorber modules would be TPS sealed modules, have been high, because manufacturing steps in series production comprise lots of manual work when an insulation is added and modules are mounted manually into a collector frame.

### Summary

One object of the invention is to withdraw the above-mentioned drawback and provide a solar thermal absorber element, which comprises a TPS sealed back insulation that enables to manufacture elements in mass production by existing automatic production lines that are used for manufacturing of a TPS insulation glass.

One object of the invention is fulfilled by providing a solar thermal absorber element of claim 1, a solar thermal collector of claim 6, and a method of claim 7.

One embodiment of the invention is a solar thermal absorber element that comprises a cover glass, a direct-flow absorber, a fore thermoplastic sealing for attaching the cover glass and the absorber to each other so that there is a distance therebetween, and a fore sealed space, which is formed by the cover glass, the absorber, and the fore sealing. The fore space is filled up with a first low thermal conductive gas. The element further comprises a back insulation part, a back thermoplastic sealing for attaching the insulation part and the absorber to each other so that there is a distance therebetween, and a back sealed space, which is formed by the insulation part, the absorber, and the back sealing. The back space is filled up with a second low thermal conductive gas.

The direct-flow absorber refers to an absorber, wherein heat transport fluid, e.g. water, air, or antifreeze, circulates inside a structure of the absorber.

The thermoplastic sealing refers to a sealing (spacer), which is made by a thermoplastic spacer (TPS) technology.

The low thermal conductive gas refers to a gas, which has a low thermal conductivity, e.g. noble gases. The noble gas can be e.g. argon, krypton, or xenon.

The roll-bond absorber refers to an absorber, which comprises at least one tube and which is provided by a roll-bond technology.

The highly selective vacuum coating refers to e.g. a coating, which is deposited in vacuum and which forms a selective absorber coating with a solar absorbance more than 96% with low thermal emission by radiation in the infrared.

One embodiment of the invention is a solar thermal collector that comprises an absorber element. The element comprises a cover glass, a direct-flow absorber, a fore thermoplastic sealing for attaching the cover glass and the absorber to each other so that there is a distance therebetween, and a fore sealed space, which is formed by the cover glass, the absorber, and the fore sealing. The fore space is filled up with a first low thermal conductive gas. The element further comprises a back insulation part, a back thermoplastic sealing for attaching the insulation part and the absorber to each other so that there is a distance therebetween, and a back sealed space, which is formed by the insulation part, the absorber, and the back sealing. The back space is filled up with a second low thermal conductive gas.

One embodiment of the invention is a method for manufacturing a solar thermal absorber element. The element comprises a cover glass, a direct-flow absorber, a fore and back thermoplastic sealings, a fore sealed space, and a back insulation part. The method comprises attaching, by the fore sealing, the cover glass and the absorber to each other so that there is a distance therebetween, whereupon the cover glass, the absorber, and the fore sealing form the fore space, filling up the fore space with a first low thermal conductive gas. The method further comprises attaching, by the back sealing, the insulation part and the absorber to each other so that there is a distance therebetween, whereupon the insulation part, the absorber, and the back sealing form the back space, and filling up the back space with a second low thermal conductive gas.

Further embodiments of the invention are defined in dependent claims.

The features recited in depending claims are mutually freely combinable unless otherwise explicitly stated.

The below definitions of verbs and terms shall be applied, unless a different definition is given in the claims or elsewhere in this description.

The verb "to comprise" is used in this document as an open limitation that neither excludes nor requires the existence of also unrecited features. The verbs "to include" and "to have/has" are defined as to comprise.

The terms "a", "an", and "at least one", as used herein, are defined as one or more than one and the term "plurality" is defined as two or more than two.

The term "another", as used herein, is defined as at least a second or more.

The term "or" is generally employed in its sense comprising "and/or" unless the content clearly dictates otherwise.

### Brief description of the figures

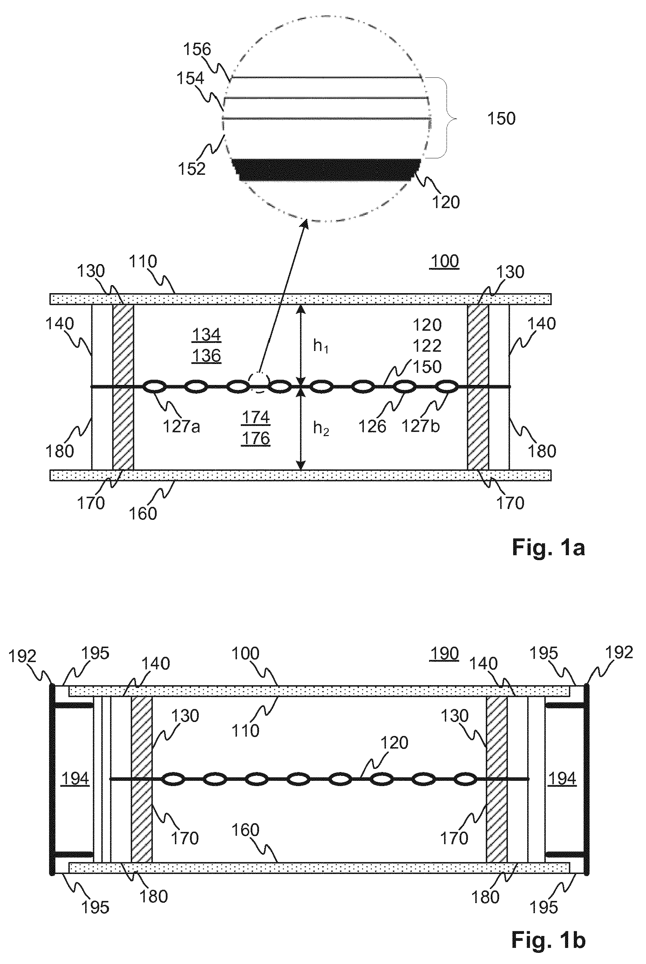

The embodiments of the invention will be described with reference to the accompanying figures, in which
figure 1 a represents a cross-section of a solar thermal absorber element and
figure 1b represents a cross-section of a solar thermal collector.

### Detailed description of the figures

Figure 1a represents a cross-section of solar thermal absorber element (module) 100.

The element 100 comprises a cover glass 110 and a direct-flow absorber 120.

The glass 110 covers the absorber 120 for mechanical damages, insects, and dust.

The glass 110 may be e.g. a highly transparent antireflective safety glass that allows solar radiation to pass to the absorber 120 and reduces heat losses from the absorber 120.

The absorber 120 is configured to absorb the solar radiation.

The absorber 120 comprises at least one heat transport tube 126 that forms a continuous heat transport channel, which has an inlet 127a and an outlet 127b. The channel is configured to circulate a heat transport fluid, e.g. water, air, or antifreeze, inside the absorber 120.

The inlet 127a and the outlet 127b are possible to connect to external devices, e.g. a tubing of a solar thermal collector 190 or its adapter means.

The absorber 120, which has a rigid structure, keeps a first distance h₁ between the glass 110 and the absorber 120 constant - i.e. prevents the absorber 120 to bend towards the glass 110 - in order to minimize thermal losses. The thermal losses are minimized when the distance h₁ is 10 mm. If the absorber 120 bends towards the glass 110 so that the distance h₁ is less than 10 mm, the thermal losses increase dramatically.

The absorber 120 may be a roll-bond absorber that is formed from e.g. two aluminium plates by a roll-bond technology.

A pattern and size of the tube(s) 126 are printed on an inner surface of one plate by a special silk screen and ink. The plates are bonded together by a rolling process, whereupon the printed pattern remains between inner surfaces of the bonded plates. The tube(s) 126 is formed between the plates by inflating compressed air through the printed pattern.

Alternatively, the absorber 120 may be a direct-flow absorber that is formed from e.g. two steel, stainless steel, or copper plates.

The tube(s) 126 is formed similarly as in the roll-bond absorber 120 except the bonding that is provided by welding the plates together.

A design of tube(s) 126 may be e.g. a single twisting tube 126 and/or a multibranched tube 126, which is configured to decrease a flow resistant of the heat transport fluid.

In addition, the absorber 120 may comprise a coating 150, which is configured to absorb light.

The coating 150 may be on a fore surface 122 of the absorber 120, wherein it faces the glass 110.

The coating 150 may be deposited in vacuum on the entire and complete absorber 120 at once by a physical vapour deposition (PVD) process and/or a plasma-enhanced chemical vapour deposition (PECVD) process.

The coating 150 may be a highly selective vacuum multilayer coating that comprises e.g. three deposited layers 152, 154, 156.

A first layer 152 on the fore surface 122 is configured to absorb light and to prevent a diffusion of elements from an absorber material that decreases a performance of the absorber 120.

A composition of the layer 152 may comprise titanium, aluminium, nitrogen, and one of following elements: silicon, yttrium, cerium, and chromium.

The composition may be e.g. (TiₓAl_{y}Si_{z})Nₐ. Alternatively, at least one of Y, Ce, and Cr may be used additionally or instead of Si.

Indices x, y, z, a, and b, indicate a stoichiometric or non- stoichiometric composition of the layers 152, 154, 156.

Values of the layer 152 for x, y, z, and a may be e.g. 0,4; 0,5; 0,1; and 1,0 respectively. Typically, the values are 0,3-0,5; 0,3-0,6; 0,03-0,2; and 0,9-1,1 respectively.

The layer 152 may have a layer thickness between e.g. 10-600 nm.

A second intermediate layer 154 on the layer 152 is configured to absorb light and to increase an interference at selected wavelengths.

A composition of the layer 154 may comprise Ti, Al, N, oxygen, and one of following elements: Si, Y, Ce, and Cr.

The composition may be e.g. (TiₓAl_{y}Si_{z})NₐO_{b}. Alternatively, at least one of Y, Ce, and Cr may be used additionally or instead of Si.

Values of the layer 154 for x, y, z, a, and b may be e.g. 0,4; 0,5; 0,1; 0,8; and 0,3 respectively. Typically, the values are 0,3-0,5; 0,3-0,6; 0,03-0,2; 0,2-0,8; and 0,2-0,8 respectively.

The layer 154 may have a layer thickness between e.g. 10-150 nm.

A third top layer 156 on the layer 154 is configured to serve as an antireflection layer and to isolate the coating 150 from a surrounding gas 136.

A composition of the layer 156 may comprise Ti, Al, Si, N, and O.

The composition may be e.g. (TiₓAl_{y}Si_{z})NₐO_{b}.

Typically, values of the layer 156 for x, y, z, a, and b may be e.g. 0-0,2; 0-0,2; 0-1; 0-2; and 0-2 respectively.

The layer 156 may have a layer thickness between e.g. 50-250 nm.

The coating 150 may be a selective absorber coating, e.g. a so-called MEMO multilayer coating, wherein the layer 152 is a TiAlSiN layer, the layer 154 is a TiAI-SiON layer, and the layer 156 is a SiO₂ layer.

In addition, the element 100 comprises a fore thermoplastic spacer (TPS) sealing 130 that attaches the glass 110 and the absorber 120 to each other so that there is a certain distance h₁, e.g. 10, 15, or 20 mm, between the glass 110 and the absorber 120.

The attachment is made by a TPS technology in an automatic production line. The sealing 130 is injected on the glass 110 for achieving a desired sealing thickness and the distance h₁. The glass 110 with the sealing 130 and the absorber 120 are pressed together so that a fore sealed space 134 is formed by the glass 110, the absorber 120, and the sealing 130 that surround the space 134.

The sealing 130 is a gas tight sealing that seals the space 134 hermetically.

The sealing 130 may be a high temperature sealing material, e.g. a butyl sealing.

While the glass 110 and the absorber 120 are pressed together, a low thermal conductive gas 136, e.g. an argon gas, is injected into the space 134 so that it is filled up with the gas 136.

The glass 110, the absorber 120, and the sealing 130 keep the gas 136 in the space 134 and prevent the gas 136 to flow outside the element 100.

The gas 136 reduces thermal losses by convection.

In addition, the element 100 comprises a fore secondary sealing 140, which is attached to the sealing 130, and between the glass 110 and the absorber 120.

The sealing 140 protects the sealing 130 and carries a weight of the absorber 120.

The sealing 140 may be e.g. a silicon sealing.

In addition, the element 100 comprises a back insulation part 160 that covers the absorber 120 for mechanical damages and supports a heat insulation of the element 100 by reducing heat losses from the absorber 120.

In addition, the insulation part 160 covers the absorber 120 for mechanical damages, insects, and dust.

The insulation part 160 may be e.g. a glass, a polyurethane (PUR) board, or a polyisocyanurate (PIR) board, whereupon it is a corrosion free.

In addition, the element 100 comprises a back TPS sealing 170 that attaches the insulation part 160 and the absorber 120 to each other so that there is a second distance h₂, e.g. 10, 15, or 20 mm, therebetween.

The attachment is made correspondingly in the automatic production line as the attachment of the glass 110 and the absorber 120 so that a back sealed space 174 is formed by the insulation part 160, the absorber 120, and the sealing 170 that surround the space 174.

The attachments of the glass 110 and the insulation part 160 may be made at the same time or successive production steps.

The sealing 170 is a gas tight sealing that seals the space 174 hermetically and it may be e.g. a butyl sealing.

The space 174 is filled up with a second low thermal conductive gas 176, e.g. an argon gas, correspondingly as the space 134.

The additions of the gases 136, 176 may be made at the same time or successive production steps in accordance with the TPS technology.

The insulation part 160, the absorber 120, and the sealing 170 keep the gas 176 in the space 174 and prevent the gas 136 to flow outside the element 100.

The gas 176 reduces thermal losses by convection.

In addition, the element 100 comprises a back secondary sealing 180, which is attached to the sealing 170, and between the insulation part 160 and the absorber 120.

The sealing 180, which may be e.g. a silicon sealing, protects the sealing 170 and carries a weight of the absorber.

The formations of the sealings 140, 180 may be made at the same time or successive production steps in accordance with the TPS technology.

The hermetically sealed space 134 preserves an efficiency of the absorber 120, when it prevents dust or insects to let in it, whereupon there is no efficiency change during a lifetime of the absorber 120 because of the dust or insects.

In addition, the hermetically sealed space 134 prevents a water condensation on the glass 110, whereupon the element 100 can start to produce energy earlier on a morning.

Figure 1b represents a cross-section of a solar thermal collector 190 that comprises the element 100 represented in figure 1 a.

The collector 190 is a flat-plate collector for e.g. high temperatures that may be used e.g. in solar cooling applications.

In addition, the collector 190 may comprise a collector frame 192 that cover the collector 190 for mechanical damages, insects, and dust.

The frame 192 may be made of e.g. an aluminium, composite plastic, or wood.

The frame 192 comprising at least one support (insulation) element 194 on its inner surface.

The support element(s) 194 supports the element 100, when the element 100 is mounted into the frame 190.

In addition, the support element(s) 194 thermally insulates the element 100 and minimize environmental effects.

The support element(s) 194 may be e.g. mineral or wood fiber wool.

The element 100 is attached to the frame 192 by gluing edges of the glass 110 and the insulation part 160 with a high temperature and UV resistant glue 190, which prevents water to penetrate inside the collector 190, and spacer tapes.

The element 100 enables to use cheaper materials for the support element(s) 194, because there is no condensation of any evaporated components from the support element(s) 194.

Alternatively, the collector 190 may be without the frame 192 and the support element(s) 194, whereupon its cross-section is in accordance with fig. 1 a.

In addition, the collector 190 may comprise adapter means and tubing means so that the the tube(s) 126 of the element 100 is possible to connect to the collector 190 by the inlet 127a, the outlet 127b, the adapter means, and the tubing means.

In addition, the element 100 enables to build very effective modular large area collectors for process and district heating systems by connecting several collectors 190.

The invention has been now explained above with reference to the aforesaid embodiments and the several advantages of the invention have been demonstrated.

It is clear that the invention is not only restricted to these embodiments, but comprises all possible embodiments within the scope of the invention thought and the following claims.

## Claims

1. A solar thermal absorber element (100) comprising
a cover glass (110),
a direct-flow absorber (120),
a fore thermoplastic sealing (130) for attaching the cover glass and the absorber to each other so that there is a distance (h₁) therebetween, and
a fore sealed space (134), which is formed by the cover glass, the absorber, and the fore sealing, and which is filled up with a first low thermal conductive gas (136),
**characterized in that** the element further comprises
a back insulation part (160),
a back thermoplastic sealing (170) for attaching the insulation part and the absorber to each other so that there is a distance (h₂) therebetween, and
a back sealed space (174), which is formed by the insulation part, the absorber, and the back sealing, and which is filled up with a second low thermal conductive gas (176).

2. The element of the preceding claim, which further comprises a back secondary sealing (180), which is attached to the back sealing and between the insulation part and the absorber, the back secondary sealing is configured to protect the back sealing and to carry a weight of the absorber.

3. The element of any of preceding claims, wherein the insulation part is a glass, a polyurethane board, or a polyisocyanurate board.

4. The element of any of preceding claims, wherein the absorber is a roll-bond absorber (120) that comprises a highly selective vacuum coating (150) on its fore surface (122), the coating is configured to absorb light.

5. The element of any of preceding claims, wherein the second low thermal conductive gas is an argon gas.

6. A solar thermal collector (190) comprising
an absorber element (100) of any of claims 1-5, which comprises
a cover glass (110),
a direct-flow absorber (120),
a fore thermoplastic sealing (130) for attaching the cover glass and the absorber to each other so that there is a distance (h₁) therebetween,
a fore sealed space (134), which is formed by the cover glass, the absorber, and the fore sealing, and which is filled up with a first low thermal conductive gas (136),
a back insulation part (160),
a back thermoplastic sealing (170) for attaching the insulation part and the absorber to each other so that there is a distance (h₂) therebetween, and
a back sealed space (174), which is formed by the insulation part, the absorber, and the back sealing, and which is filled up with a second low thermal conductive gas (176).

7. A method for manufacturing a solar thermal absorber element (100) of any of claims 1-5, which element comprises
a cover glass (110),
a direct-flow absorber (120),
a fore and back thermoplastic sealings (130, 170),
a fore sealed space (134), and
a back insulation part (160),
the method comprises
attaching, by the fore sealing (130), the cover glass and the absorber to each other so that there is a distance (h₁) therebetween, whereupon the cover glass, the absorber, and the fore sealing form the fore space,
filling up the fore space with a first low thermal conductive gas (136), attaching, by the back sealing (170), the insulation part and the absorber to each other so that there is a distance (h₂) therebetween, whereupon the insulation part, the absorber, and the back sealing form the back space, and
filling up the back space with a second low thermal conductive gas (176).
